# EUROPEAN PATENT SPECIFICATION

(11) **EP 1 997 647 B1**
(45) Date of publication and mention of the grant of the patent: **10.08.2011**
(21) Application number: 08005648.4
(22) Date of filing: 26.03.2008
(51) Int. Cl.: B60B 21/08, B60B 5/02

(54) **Rim for a bicycle wheel made from composite material with a wear indicator and wheel comprising such a rim**
Felge für ein Fahrrad aus Verbundmaterial mit einem Verschleißindikator und Rad mit einer solchen Felge
Jante pour roue de bicyclette fabriquée à partir d'un matériau composite avec un indicateur d'usure et roue comportant une telle jante

(30) Priority: 30.05.2007 IT MI20071103
(43) Date of publication of application: 03.12.2008
(73) Proprietor: CAMPAGNOLO S.r.l., 36100 Vicenza (VI) (IT)
(72) Inventor: Dal Pra', Giuseppe, 36100 Zané (Vicenza) (IT)
(74) Representative: Checcacci, Giorgio

(56) References cited:
- EP-A- 1 134 096
- EP-A- 1 231 077
- WO-A-2004/074010
- DE-A1- 19 729 824
- GB-A- 2 375 743
- US-A1- 2004 021 366

## Description

The present invention concerns a rim for a bicycle wheel made from composite material and a bicycle wheel comprising such a rim.

A rim for a bicycle wheel normally has a structure that extends between two opposite sides, connected by one or more bridges so as to form a U-shaped, inverted A-shaped or more complex section, with a plurality of so-called chambers. In wheels with pad brakes, on the sides of the rim braking races are formed, on which brake pads are pressed to brake the bicycle.

The extensive search for lightness in bicycle wheels has led to rims being made with ever lower thicknesses; in extreme cases, at the rim there is a bearing structure that is only a little more than sufficient to withstand the loads to which it is subjected. As a result of this, the wear of the rim caused by rubbing of the brake pads must be watched carefully; indeed, excessive wear of the rim at the braking races is risky to the safety of the cyclist, since it can lead to the rim suddenly collapsing in situations of extreme danger such as very hard braking. Therefore, it is necessary to indicate the state of wear of the rim so that the cyclist can know when it is the right time to replace the rim.

Rims made from metallic material are known that comprise annular or pointed recesses formed on the braking races. Their operating principle is based upon the fact that the depth of the recess decreases with wear, up to the point where the recess disappears; at that point the cyclist must replace the rim. Annular recesses are easy to make during the extrusion of the semi-worked product from which the rim is formed or by machining. Pointed recesses, on the other hand, are made by machining or by upsetting.

DE 19729824 discloses a metallic bicycle rim that includes a wear indicator; in an embodiment, the indicator is a coloured layer under the surface of the rim.

In the case of rims made from composite material, typically made with structural fibres in a matrix of polymeric material, it is not possible to make the recesses by extrusion or upsetting, whereas machining would unacceptably weaken the rim, since it would cause the shearing of the structural fibres.

US 2004/0021366 discloses a bicycle rim made of composite material, according to the preamble of claim 1.

The problem of checking the wear of rims made from composite material is totally unsatisfied.

Consequently, the present invention concerns a rim for a bicycle wheel made from composite material according to claim 1 and a bicycle wheel according to claim 46. The dependent claims refer to preferred characteristics.

In particular, a rim for a bicycle wheel made from composite material according to the invention comprises two opposite sides on which two respective braking races are formed that are subject to wear as a consequence of braking, and it comprises - at at least one of said braking races - at least one first outer layer, and a wear indicator, suitable for indicating when a predetermined level of wear has been reached by the rim at the braking races, arranged in the rim in an inner position with respect to the first layer.

In this way, the wear indicator does not in the slightest blemish the outer surface of the rim and therefore its mechanical strength.

According to the invention, the wear indicator comprises a second layer, having a visible characteristic, contrasting with the first layer. In this way, when the predetermined level of wear has been reached at the braking races, the first layer has actually disappeared precisely due to the wear and the underlying second layer remains clearly visible.

Preferably, the visible characteristic is an indicating colour, different to the colour of the first layer. The colour is indeed a characteristic that can clearly be seen and can be obtained relatively easily.

According to the invention, the second layer is made from composite material with structural fibres in a matrix of polymeric material and at least one of said structural fibres - but more preferably a plurality or even more preferably the totality thereof has said indicating colour. Alternatively or in addition, the matrix of polymeric material has said indicating colour.

In this way, the indicator consisting of the second layer is a layer structurally part of the rim, which contributes, possibly together with the first and with possible other layers, to the mechanical strength of the rim.

Preferably, said at least one fibre having said indicating colour wraps without interruptions around the entire radial extension of the braking race; this ensures both the indication of when the wear limit has been reached even in the case in which - due to possible misalignments of the brake pads or for whatever reason - the wearing of the rim on the braking races is not uniform, and an optimal mechanical strength of the second layer.

Preferably, the fibre or the fibres having said indicating colour are aramid fibres, like for example Kevlar fibres; these fibres are, indeed, easier to colour. Nevertheless, even if less preferred, glass fibres, ceramic fibres and combinations of the above can also be used.

According to a preferred solution, a first layer made from composite material comprising carbon fibres in a matrix of polymeric material is associated with a second layer with at least one coloured aramid fibre. Even more preferably all of the fibres of the second layer are coloured aramid fibres. Since carbon fibre is black, the aramid fibres shall be a different colour to black, for example yellow.

Preferably, the second layer having the indicating colour is visible through a valve hole or a spoke attachment hole. This allows the user and the manufacturer to directly check for the presence of the wear indicator on a new rim.

Preferably, the predetermined level of wear corresponds to the complete wear of the first layer at the braking races, or else to the complete wear of the second layer at the braking races. In both cases, the predetermined level of wear can be a pre-alarm level if the whole of the remaining levels - although reduced - is still sufficient to maintain an adequate safety margin, or else an alarm level if the whole of the remaining layers is just sufficient to maintain the structural integrity of the rim.

Preferably, the first layer has a thickness of between 0.1 and 0.8 mm, more preferably between 0.3 and 0.5 mm; preferably, the second layer has a thickness of between 0.2 and 1 mm, more preferably between 0.4 and 0.8 mm.

According to an embodiment outside the invention, the wear indicator comprises a metallic element. In this case, the wear of the rim can be detected through a suitable sensor device, housed on the bicycle in a suitable position opposite the braking races; the sensor device can for example comprise means for generating an electromagnetic field extending so far as to include the rim and the metallic element and means for detecting an electrical magnitude that varies as the amount of composite material arranged between the sensor device itself and the metallic element varies. This embodiment is particularly preferred for bicycles equipped with a bicycle computer, which can therefore provide the wear indication to the cyclist.

According to a variant that is also outside the invention, the wear indicator comprises an inductive sensor. In this case, the wear of the rim can be detected through a suitable sensor device, housed on the bicycle in a suitable position opposite the braking races; the sensor device can for example comprise means for detecting an electromagnetic field generated by the inductive sensor to detect an electrical magnitude that varies as the amount of composite material arranged between the sensor device itself and the inductive sensor varies. This embodiment is also particularly preferred for bicycles equipped with a bicycle computer, which can therefore provide the indication of wear to the cyclist.

The metallic element or the inductive sensor can be incorporated in the composite material in an inner position with respect to the first layer. The metallic element can have any configuration, for example it can be formed from one or more plates or else one or more wires.

It should be observed that advantageously both the metallic element and the inductive sensor can be detected, for example with X-rays, even when the wheel is not worn. In this way it is possible to be sure of their presence before selling the rims and avoid unfortunate accidents to cyclists that put their faith in the indication of wear.

Preferably, the wear indicator extends in the circumferential direction on at least one part of the rim, and more preferably on the totality of the rim.

Just one wear indicator can be provided at just one of the braking races, but preferably a respective wear indicator is provided at each of the braking races; indeed, it is possible for the wear of the rim to be accentuated at one of the two braking races.

Preferably, the wear indicator extends in the radial direction even outside of the braking races. This ensures that the area that has worn is actually covered by the wear indicator even in the case of possible imprecisions in positioning.

In a preferred embodiment, the braking races are connected by an upper bridge and by a lower bridge, and the wear indicator extends at at least one of the braking races and the upper bridge. In another preferred embodiment, the braking races are connected by an upper bridge and by a lower bridge, and in which the wear indicator extends at at least one of the braking races and the lower bridge.

In a preferred embodiment, the wear indicator extends in the radial direction for a height that is shorter than the height of the braking races.

In a preferred embodiment, the braking races are connected by at least one bridge and comprise wings projecting radially outside of the bridge so as to form, together with the bridge, a space for holding a tyre, in which the wear indicator extends at least partially on at least one wing.

Preferably, the rim also comprises at least one second layer, in an inner position with respect to the first layer; more preferably, the second layer has structural capacity. By this expression it is meant that the layer has mechanical strength such as to significantly contribute to the mechanical strength of the rim.

Preferably, the second layer is made from composite material with structural fibres in a matrix of polymeric material. More preferably, the structural fibres of the second layer are aramid fibres, glass fibres or ceramic fibres.

Preferably, the first layer is made from composite material with structural fibres - more preferably bi-directional structural fibres - in a matrix of polymeric material, and therefore it also contributes to the mechanical strength of the rim; more preferably, the first layer comprises at least two sheets of composite material one on top of the other, even more preferably having a thickness of between 0.1 and 0.3 mm. Alternatively, the first layer does not have structural capacities, and therefore is only used to cover the second layer until the predetermined conditions of wear are reached; since the fact that the first layer without structural capacities has completely worn down is indicated, this alternative is preferable should one wish to substantially avoid using a rim whose mechanical characteristics are damaged even if only minimally.

Preferably, the rim also comprises at least one third layer, in an inner position with respect to the second layer, more preferably of a different type to the second layer and of the same type as the first layer. This solution is of particular interest in the case of an indicator based upon the indicating colour, because it allows an additional way of operating, with two alarm levels; indeed, it is possible to size the thickness of the first layer and of the second layer having the indicating colour so that there is a pre-alarm signal when the first layer has completely worn down and the second layer has become visible, whereas the alarm signal (need to replace the rim) is given by the subsequent disappearance of the second layer after it has also worn down.

According to a preferred embodiment, the presence of the wear indicator can also be detected when the rim has not yet worn down, for example and preferably through X-rays or else through a valve hole or a spoke attachment hole. This allows the user and the manufacturer to directly check for the presence of the wear indicator on a new rim.

Further characteristics and advantages of the present invention shall become clearer from the following detailed description of some preferred embodiments thereof, made with reference to the attached drawings. In such drawings,
- figure 1 is a section view of a rim according to a first embodiment of the invention;
- figure 2 is an enlarged section view of a portion of the rim of figure 1;
- figure 3 is a perspective view with parts partially removed of a portion of the rim of figure 1;
- figure 4 is a side view of a bicycle wheel with the rim of figure 1;
- figure 5 is a side view of a bicycle wheel with a rim according to another embodiment of the invention;
- figures 6 to 12 are section views of rims according to other embodiments of the invention:
- figure 13 is a perspective view, with parts partially removed, of portions of rim according to another embodiment of the invention;
- figures 14 and 15 are perspective views, with parts partially removed, of portions of rim according to embodiments that are not part of the invention.

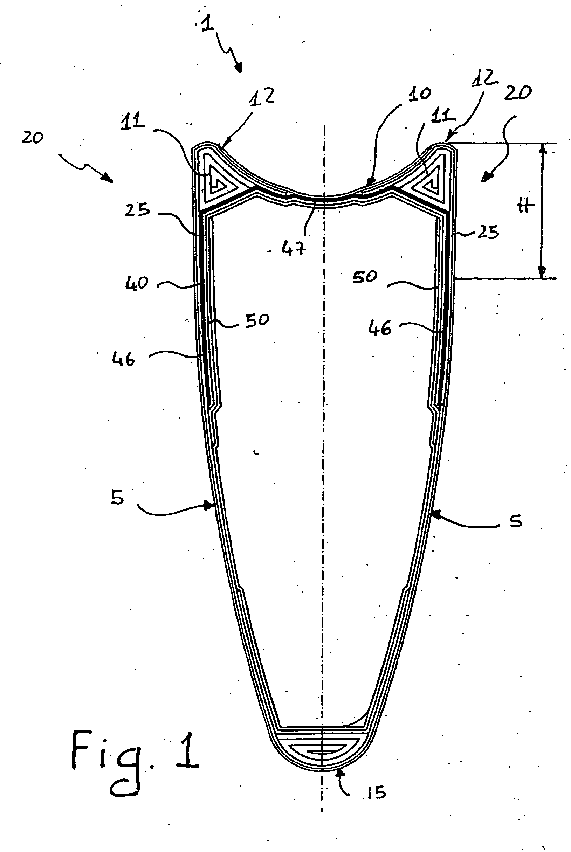

With particular reference to figures 1 to 4, a rim 1 made from composite material in accordance with the invention comprises two lateral sides 5 joined by an upper bridge 10 and a lower bridge 15 so as to form a tubular bearing structure.

The sides 5 each comprise a braking race 20, meaning an area In which the brake pads of a bicycle can act during braking, on which bicycle a wheel is mounted that comprises the rim 1. The rim 1 is of the so-called high profile type, i.e. with a very pronounced extension in the radial direction. The braking races 20 are of a greater width than the width provided for the brake pads, to allow a range of acceptable positions. Typically, braking races can be considered to be the radially most outer portions of the sides 5 for a height H equal to about 10-12 mm, but different measurements are of course possible. In order to counteract the action of the brake pads on the braking races 20, at such races 20 the sides 5 have a greater thickness than in the other areas.

In particular, at the braking races 20 the sides 5 of the rim 1 comprise a first outer layer 25, made from composite material; the composite material comprises structural fibres incorporated in a matrix of polymeric material. The structural fibres are selected from the group consisting of carbon fibres, glass fibres, aramid fibres, ceramic fibres, boron fibres, polyester fibres and combinations thereof; carbon fibres, being black, are preferred.

The arrangement of the structural fibres in the polymeric material can be a random arrangement of pieces or sheets of structural fibres, a substantially unidirectional ordered arrangement of fibres, a substantially bidirectional ordered arrangement of fibres, for example woven according to a weft and a warp, or a combination thereof.

Preferably, the polymeric material of the matrix is thermosetting, but this does not rule out the possibility of using a thermoplastic material. More preferably, the matrix comprises an epoxy resin.

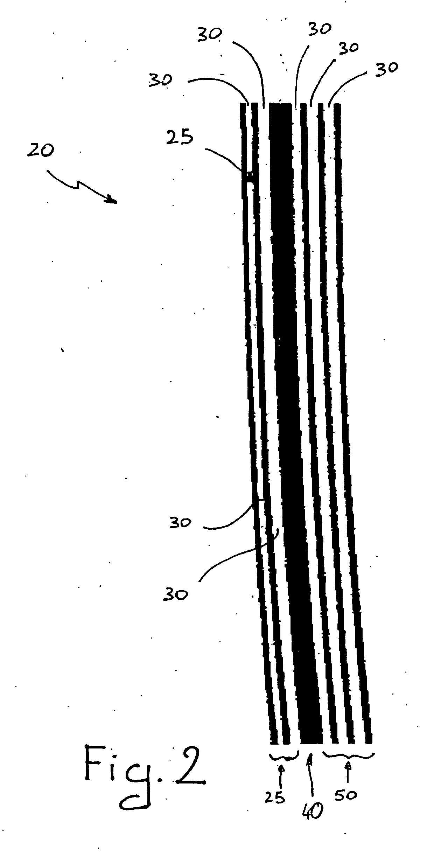

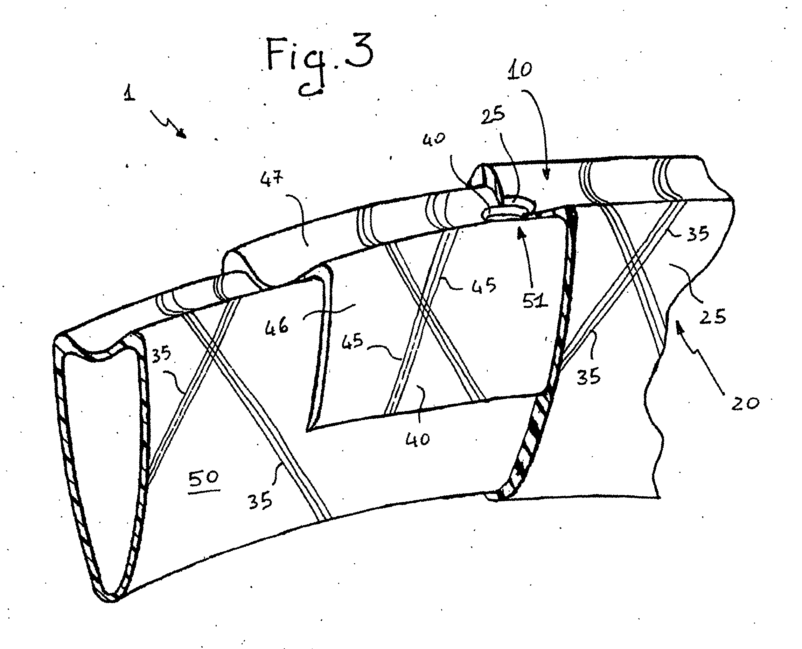

Preferably, as shown in figure 2 and in figure 3, the composite material is made with piled up sheets 30 comprising continuous bi-directional fibres 35. The sheets 30 preferably have a thickness of between 0.1 and 0.3 mm.

The first layer 25 preferably has a thickness of between 0.1 and 0.8 mm, even more preferably it is between 0.3 and 0.5 mm, for which reason preferably the outer layer 25 is formed from two sheets 30.

Immediately below the first layer 25, a second layer 40 is arranged, which forms a wear indicator. Preferably, such a layer 40 is also made from composite material, but it has a visible characteristic contrasting with the first layer 25. By the term "visible" it is clearly meant that the characteristic is visible when the second layer 40 is not covered by something else, for example by the first layer 25. Preferably, such a visible characteristic is an indicating colour, given to at least part of the second layer 40. For example, the composite material of the layer 40 comprises aramid, ceramic or glass fibres 45, since they are relatively easy to colour compared to other fibres, and an epoxy matrix, identical to that of the outer layer 25; aramid fibres, like for example Kevlar®, are preferred. The aramid fibres contribute to the structural strength of the rim whereas the matrix in common between the layers allows better linking. The fibres 45 preferably have the same ordering of the fibres 35 as the first layer 25, and in any case continuous fibres are preferred in the areas of the braking races 20.

In order that the second layer 40 forms a wear indicator, at least one of the fibres 45 of such a layer (preferably at least some of them and more preferably all) has said indicating colour. Alternatively or in addition, it is possible for the polymeric matrix to be coloured with said indicating colour.

The thickness of the second wear indicator layer 40 is preferably between 0.2 and 1 mm, and even more preferably between 0.4 and 0.8 mm, and it can be obtained by piling up one or more sheets 30 of composite material.

In the embodiment illustrated in figures 1 and 3, the second wear indicator layer 40 comprises portions 46 extending for part of the height of both of the braking races 20 and connected together through an upper portion 47, incorporated in the bridge 10. The portions 46 extend on the sides 5 even outside of the braking races 20, in a radially inner direction. This configuration of the second wear indicator layer 40 allows a more stable positioning during the lamination steps of the rim 1 and therefore reduces the risk of the layer 40 no longer being at the braking races 20 due to accidental movements during lamination. It should also be noted that the upper bridge 10, at its side ends, comprises two thickened areas formed from sheets 11 wound upon themselves and arranged to form annular seams 12, surrounded on the outside by the first layer 25. The second wear indicator layer 40 is not arranged between the filling sheets 11 of the seams 12 and the outer layer 25, given that the portions 46 and 47 are joined at a point radially below such filling sheets 11.

The upper bridge 10 comprises a hole 51 to allow the passage of an inflation valve (not shown) of a tyre associated with the rim 1, and possibly also other spoke attachment holes for the assembly of spokes (not shown) for connection of the rim 1 to a hub. The hole 51 (and/or possibly the spoke attachment holes) also crosses the connection portion 47 of the second layer 40 and thus makes it possible to visually check whether the wear indicator layer 40 has been inserted during construction.

Below the second wear indicator layer 40, i.e. in an inner position with respect to it, a third inner layer 50, preferably of the same material as the first layer 25 is also preferably provided. As can be seen more clearly in figure 2, the third layer 50 preferably consists of at least three sheets 30, with an overall thickness of the layer of between 0.2 and 1 mm, more preferably between 0.4 and 0.8 mm.

The fibres 35 of the third layer 50 are preferably continuous, i.e. without interruption, at the braking races 20.

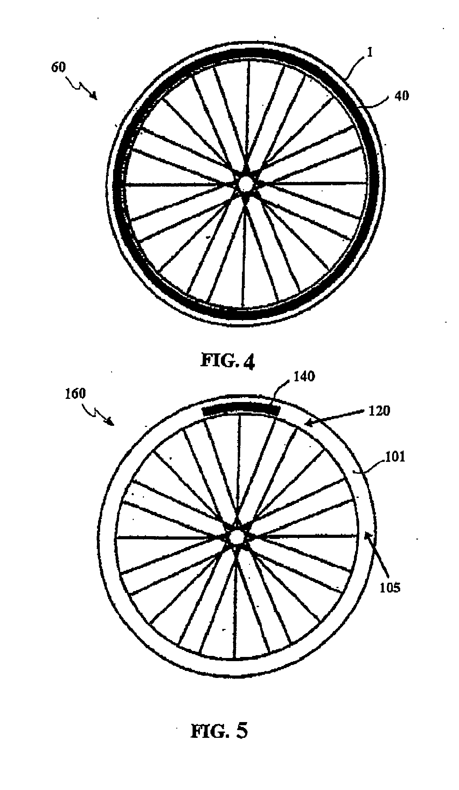

The second wear indicator layer 40 is an annular layer, extending in the circumferential direction on the totality of the rim 1, as can be seen in figure 4 that illustrates a wheel 60 that comprises the rim 1.

The invention described above with reference to the rim 1 can also be actuated in different ways. Some different embodiments shall be described hereafter with reference to figures 5 to 12.

Figure 5 shows a wheel 160 with a rim 101 similar to the rim 1 (i.e. with sides 105, braking races 120, a first layer 125, a second layer 140 and a third layer 150), in which, however, the second wear indicator layer 140 is only provided in one sector.

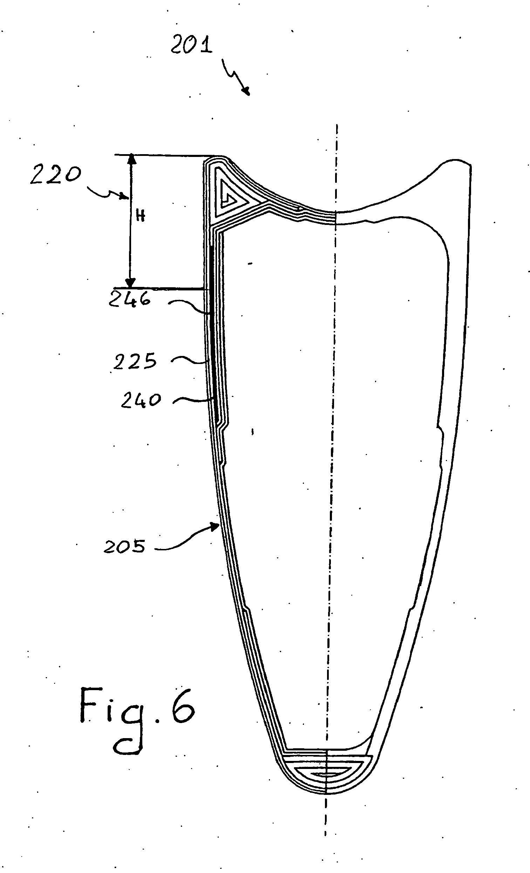

Figure 6 shows a rim 201 similar to the rim 1 (i.e. with sides 205, braking races 220, a first layer 225 and a second layer 240), equipped, however, with a second wear indicator layer 240 in which there is just a portion 246, extending for part of the height H of just one of the two braking races 220 and also beyond, in a radially inner direction.

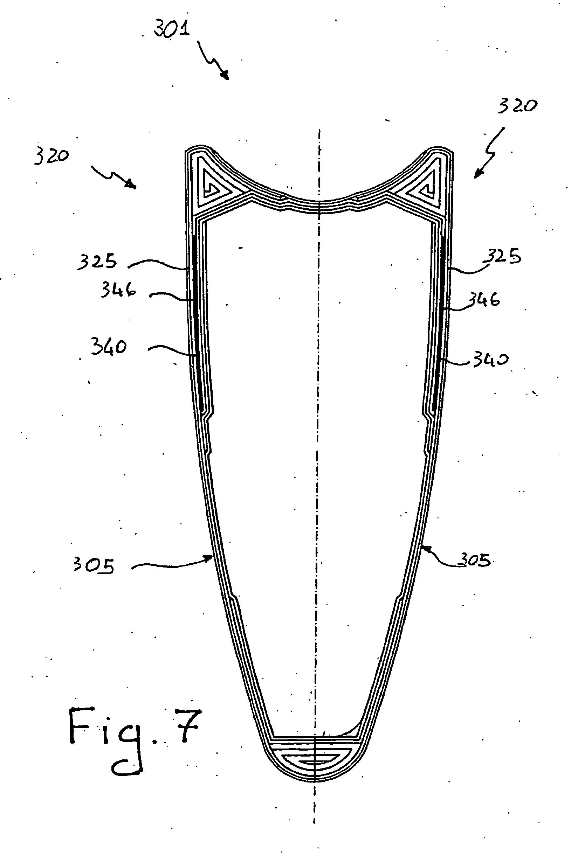

Figure 7 shows a rim 301 similar to the rim 1 (i.e. with sides 305, braking races 320, a first layer 325 and a second layer 340), in which, however, the second wear indicator layer 340 comprises two separate portions 246, one for each of the two braking races 20, and no connection portion between them.

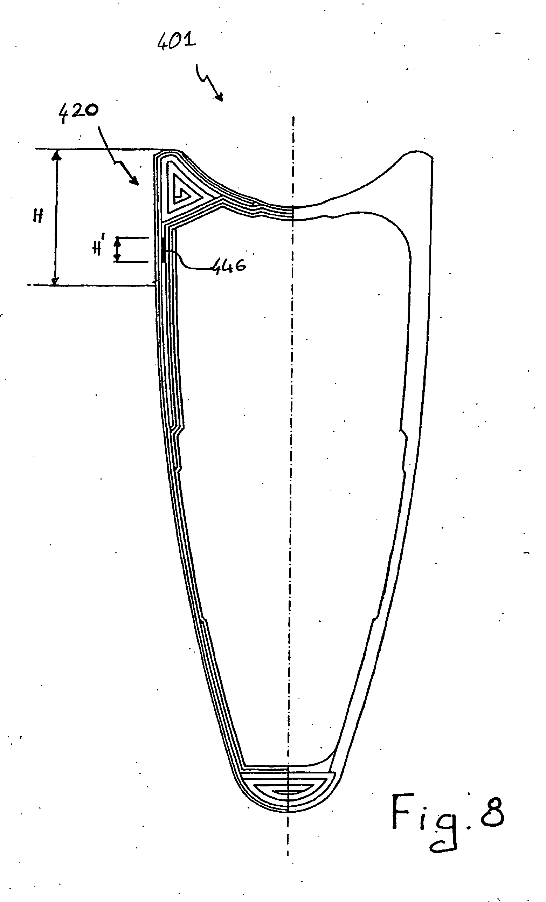

Figure 8 shows a rim 401 similar to the rim 1 (i.e. with sides 405, braking races 420, a first layer 425 and a second layer 440), equipped, however, with a second wear indicator layer 440 in which there is just a portion 446 extending for a portion H' of the height H of just one of the two braking races 420.

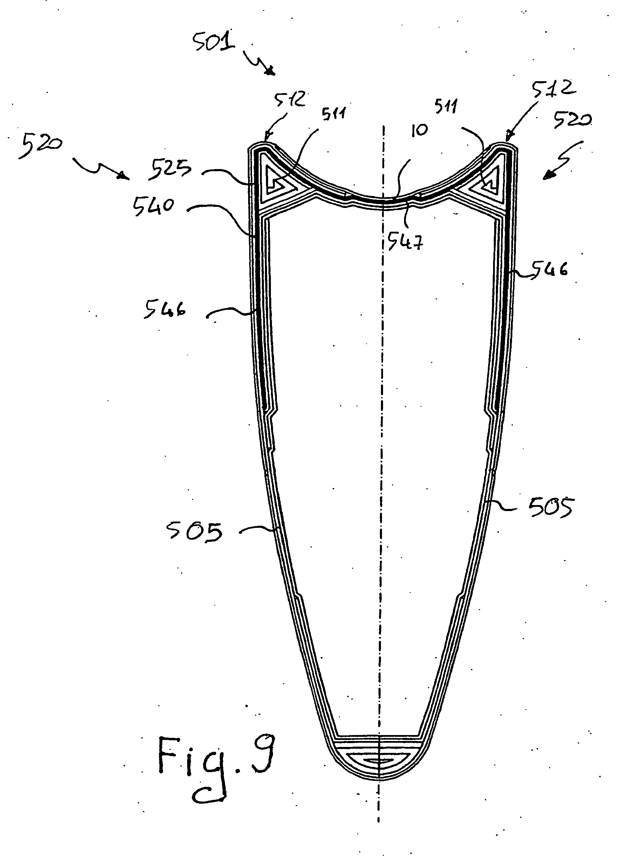

Figure 9 shows a rim 501 similar to the rim 1 (i.e. with sides 505, braking races 520, a first layer 525 and a second layer 540), in which, however, the second wear indicator layer 540 (in turn comprising lateral portions 546 connected by an upper portion 547) is arranged between filling sheets 511 of seams 512 and the first layer 525, so as to extend for the entire height H of the braking races 520.

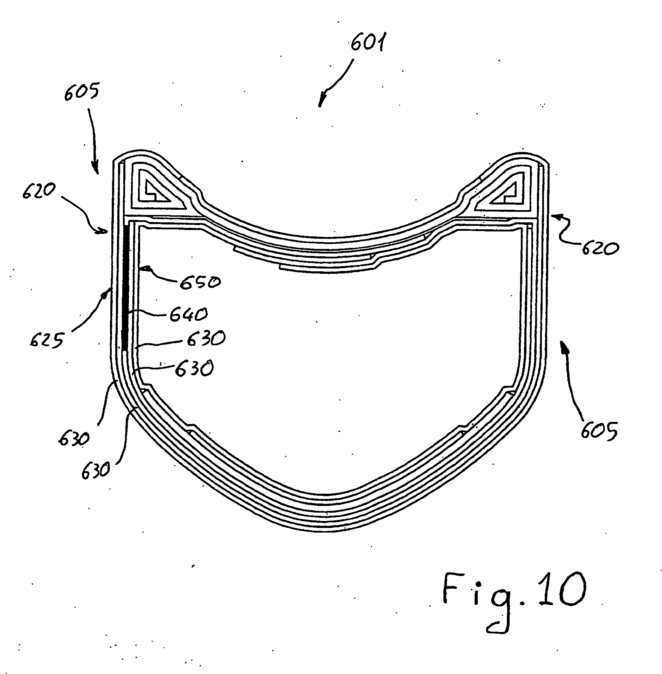

Figure 10 shows a rim 601 similar to the rim 1 (i.e. with sides 605, braking races 620, a first layer 625 and a second layer 640), however of the so-called low profile type; in such a rim 601, the braking races 620 substantially coincide with the entire sides 605. The structure of the rim 601 is more robust and therefore the second wear indicator layer 640 is inserted between a first outer layer 625 and a third inner layer 650 both formed from just two sheets 630, similar to the sheets 30 of the rim 1. Therefore, both the layer 625 and the layer 650 have a thickness of between 0.2 and 0.6 mm.

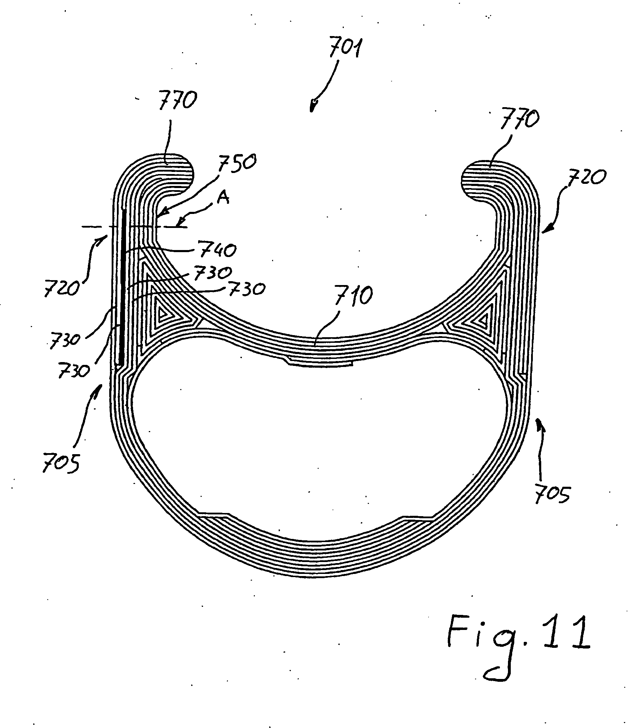

Figure 11 shows a rim 701 similar to the rim 1 (i.e. with sides 705, braking races 720, a first layer 725 and a second layer 740), however of the type intended to house a clincher tyre; the difference compared to the rims illustrated previously is the presence of two wings 770 for holding the clincher tyre that project radially outwards from the upper bridge 710, as an extension of the sides 705. The braking races 720 in this case also comprise part of the wings 770 and thus are moved radially further out with respect to the rims described previously, in particular they are mostly at the upper bridge 710.

With this type of rim, the greatest risk of wear is at the wings 770, which, if made excessively thin, can yield under the pressure of the tyre, leaving it free. Therefore, it is preferable for the second wear indicator layer 740 to engage at least the section A for attachment of the wings 770 to the upper bridge 710. Also in this case it is preferable for there to be a third inner layer 750, comprising at least two sheets 730 with continuous structural fibres below the second wear indicator layer 740.

Although the rim 701 for a clincher tyre illustrated is of the low profile type, it is nevertheless possible to provide versions of the high profile type, which differ from the one of figure 11 in that the sides 705 are higher in the radial direction.

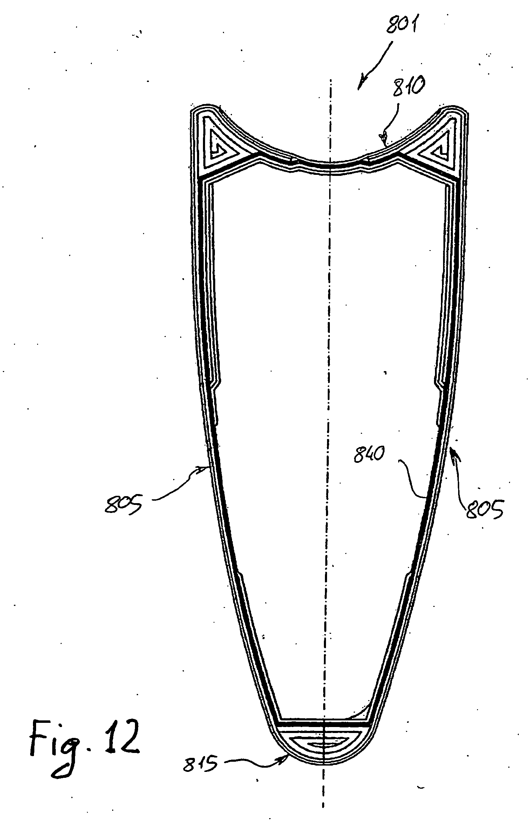

Figure 12 shows a rim 801 similar to the rim 1 (i.e. with sides 805, braking races 820, a first layer 825 and a second layer 840), in which, however, the second wear indicator layer 840 extends continuously on the sides 805 of the rim and on the lower bridge 815. Preferably, the second wear indicator layer 840 also extends on the upper bridge 810.

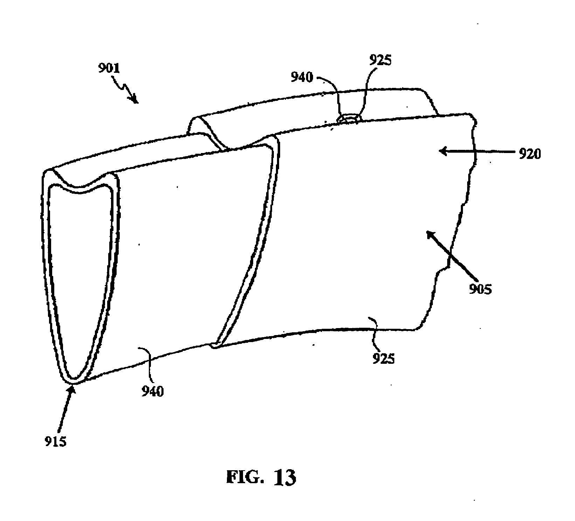

Figure 13 shows a rim 901 similar to the rim 1, including sides 905, a braking surface 920 and a lower bridge 915, in which, however, the second wear indicator layer 940 is sized so as to perform by itself the task of a bearer structure of the rim 901 when the first layer 925 has worn down, without needing a third inner layer. In this case, the second wear indicator layer 940 has a thickness of between 0.2 and 1 mm, and even more preferably between 0.4 and 0.8 mm, for example being formed from at least three sheets.

The indication of wear in all of the rims described above is based upon the complete wear of the first outer layer: when such a first layer is completely worn down (at at least one of the braking races), the second indicating layer becomes visible.

According to the structure of the rim, the appearance of the second layer can be an alarm that indicates the need to replace the rim more or less immediately (if the whole of the remaining layers is just sufficient to maintain the structural integrity of the rim) or else it can just be a pre-alarm that suggests that the wear be checked with a view to imminent replacement (if the whole of the remaining layers - although reduced - is still sufficient to maintain a suitable safety margin). In this last case, a subsequent alarm signal is advantageously provided, given the disappearance of the second indication layer because it has in turn worn down; this is clearly possible only in the presence of a suitably sized third inner layer.

Both for rims for tubular tyres and for rims for clincher tyres, it is also possible to provide a type with medium profile, with a radial extension of the intermediate sides between that of the types with high and low profile.

Each type can, finally, have a second wear indicator layer formed from a single side portion, like the portion 246 of the rim 201 of figure 6, or else from two separate side portions, like the portions 346 of the rim 301 of figure 7, or else from two side portions connected by an upper portion, like the portions 46 and 47 of the rim 1 of figures 1 to 4 or the portions 546 and 547 of the rim 501 of figure 9.

In all of the embodiments in which there is both a first outer layer and a third inner layer distinct from the second wear indicator layer, the latter can also consist of just a film of coloured resin, for example of the same type as the matrices used in the other layers, thus preferably epoxy. In this case the second wear indicator layer does not have structural capacity since it has no fibres.

In all of the embodiments, the first outer layer, being a layer intended to be removable, can be a layer without structural capacity, i.e. without fibres; in this way, the wear indicator layer indicates when the risk of damaging the bearing structure begins given by the third inner layer and/or by the second wear indicator layer, which are provided with fibres and thus have structural capacity. This solution is particularly cost-effective.

It should be noted that the crossed arrangement (for example woven) of the fibres in the layers illustrated represents the preferred embodiment, but other arrangements could be adopted, like unidirectional arrangements or alternation of layers with fibres with different arrangements.

As an alternative to indication by means of a visible characteristic that appears following wear of the first layer, as stated above the invention also provides the possibility of inserting a metallic element or an inductive sensor inside the rim. This embodiment has the advantage of making it possible to check for the presence of the wear indicator in the rim, for example with X-rays.

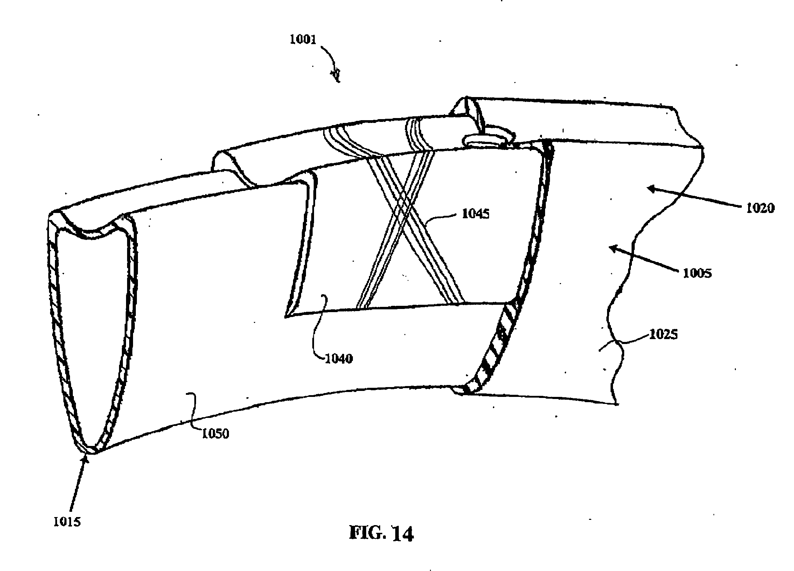

Figure 14 shows a rim 1001 with a lower bridge 1015, sides 1005 and braking races 1020, comprising three layers, 1025, 1040 and 1050, in which the wear indicator is formed from metallic fibres 1045 incorporated in the second layer 1040 of composite material. In order to promote the integration with the composite material and to avoid movements during the steps of manufacture, the metallic fibres 1045 can be treated on the surface.

By using a rim 1001, it is possible to generate an electrical or magnetic signal by means of a sensor, for example arranged on the fork of the bicycle on which the rim 1001 is mounted or on a brake. The amount of material arranged between the metallic fibres 1045 and the sensor influences a measured electrical magnitude, based upon which it is thus possible to work out the residual thickness of the rim 1001 and based upon this to display a message on a control device for example mounted on the bicycle handlebars.

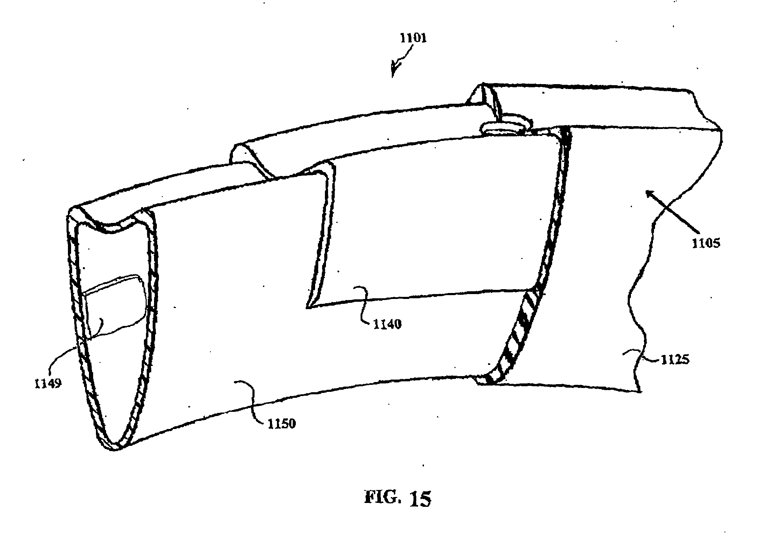

Figure 15 shows a rim 1101 with sides 1105 and braking races 1120, comprising three layers, 1125, 1140 and 1150, in which the wear indicator is an inductive sensor 1149, applied inside the tubular cavity of the rim 1101; it is possible to obtain the thickness of the rim 1101 in real time and generate an alarm signal when the thickness has reduced to below a certain threshold or has reached zero. The inductive sensor 1149 can communicate with the control device for example via radio.

Other embodiments are of course possible. In particular, a man skilled in the art can without any effort combine the individual characteristics of the embodiments described above.

## Claims

1. Rim made from composite material for a bicycle wheel, comprising two opposite sides (5; 105; 205; 305; 405; 505; 605; 705; 805; 905) on which two respective braking races (20; 120; 220; 320; 420; 520; 620; 720; 820; 920) are formed that are subject to wear as a consequence of braking, chatacterised in that it comprises - at at least one of said braking races - at least one first outer layer (25; 125; 225; 325; 425; 525; 625; 725; 825; 925), and a wear indicator (40; 140; 240; 340; 440; 540; 640; 740; 840; 940), suitable for indicating when a predetermined level of wear has been reached by the rim at the braking races (20; 120; 220; 320; 420; 520; 620; 720; 820; 920), arranged in the rim in an inner position with respect to the first layer (25; 125; 225; 325; 425; 525; 625; 725; 825; 925), wherein the wear indicator comprises a second layer of said rim (40; 140; 240; 340; 440; 540; 640; 740; 840; 940) made from composite material with structural fibres (45) in a matrix of polymeric material and wherein in said second layer (40; 140; 240; 340; 440; 540; 640; 740; 840; 940) either at least one of said structural fibres (45) or said matrix of polymeric material or both have a visible characteristic, contrasting with the first layer (25; 125; 225; 325; 425; 525; 625; 725; 825; 925).

2. Rim according to claim 1, wherein the visible characteristic is an indicating colour, different from the colour of the first layer (25; 125; 225; 325; 425; 525; 625; 725; 825; 925).

3. Rim according to claim 2, wherein a plurality of said fibres (45) have said indicating colour.

4. Rim according to claim 3, wherein the totality of said fibres (45) have said indicating colour.

5. Rim according to claim 2, wherein said at least one fibre having said indicating colour wraps without interruptions around the entire radial extension of the braking race (520; 720).

6. Rim according to claim 2, wherein said at least one fibre (45) having said indicating colour is an aramid fibre, a ceramic fibre or a glass fibre.

7. Rim according to claim 6 wherein said at least one coloured fibre (45) is an aramid fibre and the first layer (25; 125; 225; 325; 425; 525; 625; 725; 825; 925) is made from composite material comprising carbon fibres in a matrix of polymeric material.

8. Rim according to claim 7, wherein all of the fibres of the second layer (40; 140; 240; 340; 440; 540; 640; 740; 840; 940) are coloured fibres.

9. Rim according to claim 1, wherein the visible characteristic is visible through a valve hole (51) or a spoke attachment hole.

10. Rim according to any one of claims 1 to 9, wherein the predetermined level of wear corresponds to the complete wear of the first layer (25; 125; 225; 325; 425: 525; 625; 725; 825; 925) at the braking races (20; 120; 220; 320; 420; 520; 620; 720; 820; 920).

11. Rim according to any one of claims 1 to 9, wherein the predetermined level of wear corresponds to the complete wear of the second layer (40; 140; 240; 340; 440; 540; 640; 740; 840; 940) at the braking races (20; 120; 220; 320; 420; 520; 620; 720; 820; 920).

12. Rim according to claim 10 or 11, wherein the first layer has a thickness of between 0.1 and 0.8 mm.

13. Rim according to claim 12, wherein the first layer (25; 125; 225; 325; 425; 525; 625; 725; 825; 925) has a thickness of between 0.3 and 0.5 mm.

14. Rim according to claim 12 or 13, wherein the second layer (40; 140; 240; 340; 440; 540; 640; 740; 840; 940) has a thickness of between 0.2 and 1 mm.

15. Rim according to claim 14 wherein the second layer (40; 140; 240; 340; 440; 540; 640; 740; 840; 940) has a thickness of between 0.4 and 0.8 mm.

16. Rim according to claim 1, wherein the wear indicator (40; 140; 240; 340; 440; 540; 640; 740; 840; 940) extends in the circumferential direction on at least one part of the rim (60; 160).

17. Rim according to claim 16, wherein the wear indicator (40; 140; 240; 340; 440; 540; 640; 740; 840; 940) extends in the circumferential direction on the totality of the rim (60; 160).

18. Rim according to claim 1. wherein a wear indicator (240; 440; 640; 740) is provided at Just one of the braking races (220; 420; 620; 720).

19. Rim according to claim 1, wherein a respective wear indicator (40; 140; 340; 540; 840; 940) is provided at each of the braking races (20; 120; 320; 520; 620; 920).

20. Rim according to claim 1, wherein the wear indicator (40; 140; 240; 340; 540; 640; 740; 840; 940) extends in the radial direction even outside of the braking races (20; 120; 220; 320; 520; 620; 720; 820; 920).

21. Rim according to claims 1, wherein the braking races (20: 520; 820; 920) are connected by an upper bridge (10; 510; 810; 910) and by a lower bridge (15; 515; 815; 915), and wherein the wear indicator (40; 540; 840; 940) extends at at least one of the braking races (20; 520; 820; 920) and at the upper bridge (10; 510; 810; 910).

22. Rim according to claim 1, wherein the braking races (820) are connected by an upper bridge (810) and by a lower bridge (815), and wherein the wear indicator (840) extends at at least one of the braking races (820) and at the lower bridge (815).

23. Rim according to claim 1, wherein the wear indicator (40; 140; 240; 340; 440; 640) extends in the radial direction for a height that is lower than the height of the braking races (20; 120; 220; 320; 420; 620).

24. Rim according to claim 1 wherein the braking races (720) are connected by at least one bridge (710) and comprise wings (770) projecting radially outside of the bridge (710) so as to form, together with the bridge (710), a space for holding a tyre, wherein the wear indicator (740) extends at least partially on at least one wing (770).

25. Rim according to claim 1, wherein the rim also comprises at least one second layer (40; 140; 240; 340; 440; 540; 640; 740; 840; 940), in an inner position with respect to the first layer (25; 125; 225; 325; 425; 525; 625; 725; 825; 925).

26. Rim according to claim 25, wherein the second layer (40; 140; 240; 340; 440; 540; 640; 740; 840; 940) has structural capacity.

27. Rim according to claim 26, wherein the second layer (40; 140; 240; 340; 440; 540; 640; 740; 840; 940) is made from composite material with structural fibres (45) in a matrix of polymeric material.

28. Rim according to claims 27, wherein the structural fibres (45) are aramid fibres, glass fibres or ceramic fibres.

29. Rim according to claim 1, wherein the first layer (25; 125; 225; 325; 425; 525; 625; 725; 825; 925) is made from composite material with structural fibres in a matrix of polymeric material.

30. Rim according to claim 29, wherein the first layer (25; 125; 225; 325; 425; 525; 625; 725; 825; 925) comprises at least two sheets of composite material one on top of the other.

31. Rim according to claim 30, wherein said sheets have a thickness of between 0.1 and 0.3 mm.

32. Rim according to claim 29, wherein the composite material comprises bidirectional structural fibres.

33. Rim according to claim 1, wherein the first layer does not have structural capacities.

34. Rim according to claim 25, comprising a third layer (50; 150; 250; 350; 450; 550; 650; 750; 850; 950), In an inner position with respect to the second layer.

35. Rim according to claim 34, wherein the third layer (50; 150; 250; 350; 450; 550; 650; 750; 850; 950) is of a different type to the second layer (40; 140; 240; 340; 440; 540; 640; 740; 840; 940).

36. Rim according to claim 34, wherein the third layer (50; 150; 250; 350; 450; 550; 650; 750; 850; 950) is of the same type as the first layer (25; 125; 225; 325; 425; 525; 625; 725; 825; 925).

37. Rim according to claim 1, wherein the presence of the wear indicator (40; 140; 240; 340; 440; 540; 640; 740; 840; 940) can also be detected when the rim is not yet worn.

38. Rim according to claim 35, wherein the presence of the wear indicator (40; 140; 240; 340; 440; 540; 640; 740; 840; 940) can be detected through a valve hole (51) or a spoke attachment hole.

39. Bicycle wheel, comprising a rim (1; 101; 201; 301; 401; 501; 601; 701; 801; 901) according to any one of the previous claims.

## Patentansprüche

1. Aus Verbundmaterial bestehende Felge für ein Rad eines Fahrrades, die zwei einander gegenüberliegende Seiten (5; 105; 205; 305; 405; 505; 605; 705; 805; 905) umfasst, an denen zwei entsprechende Bremsflächen (20; 120; 220; 320; 420; 520; 620; 720; 820; 920) ausgebildet sind, die als Folge von Bremsen Verschleiß unterliegen, **dadurch gekennzeichnet, dass** die Felge an wenigstens einer der Bremsflächen wenigstens eine erste äußere Schicht (25; 125; 225; 325; 425; 525; 625; 725; 825; 925) und eine Verschleißanzeige (40; 140; 240; 340; 440; 540; 640; 740; 840; 940) umfasst, die sich dazu eignet, anzuzeigen, wenn die Felge eine bestimmte Verschleißstufe an den Bremsflächen erreicht hat, und die in der Felge an einer inneren Position in Bezug auf die erste Schicht (25; 125; 225; 325; 425; 525; 625; 725; 825; 925) angeordnet ist, wobei die Verschleißanzeige eine zweite Schicht (40; 140; 240; 340; 440; 540; 640; 740; 840; 940) der aus Verbundmaterial bestehenden Felge mit strukturellen Fasern (45) in einer Matrix aus Polymermaterial umfasst und in der zweiten Schicht (40; 140; 240; 340; 440; 540; 640; 740; 840; 940) entweder wenigstens die strukturellen Fasern (45) oder die Matrix aus Polymermaterial oder beide ein sichtbares Merkmal aufweisen, das zu der ersten Schicht (25; 125; 225; 325; 425; 525; 625; 725; 825; 925) kontrastiert.

2. Felge nach Anspruch 1, wobei das sichtbare Merkmal eine Anzeigefarbe ist, die sich von der Farbe der ersten Schicht (25; 125; 225; 325; 425; 525; 625; 725; 825; 925) unterscheidet.

3. Felge nach Anspruch 2, wobei eine Vielzahl der Fasern (45) die Anzeigefarbe haben.

4. Felge nach Anspruch 3, wobei alle der Fasern (45) die Anzeigefarbe haben.

5. Felge nach Anspruch 2, wobei sich die wenigstens eine Faser, die die Anzeigefarbe hat, um die gesamte radiale Ausdehnung der Bremsfläche (520; 720) herumzieht.

6. Felge nach Anspruch 2, wobei die wenigstens eine Faser (45), die die Anzeigefarbe hat, eine Aramidfaser, eine Keramikfaser oder eine Glasfaser ist.

7. Felge nach Anspruch 6, wobei die wenigstens eine farbige Faser (45) eine Aramidfaser ist und die erste Schicht (25; 125; 225; 325; 425; 525; 625; 725; 825; 925) aus Verbundmaterial besteht, das Kohlefasern in einer Matrix aus Polymermaterial umfasst.

8. Felge nach Anspruch 7, wobei alle der Fasern der zweiten Schicht (40; 140; 240; 340; 440; 540; 640; 740; 840; 940) farbige Fasern sind.

9. Felge nach Anspruch 1, wobei das sichtbare Merkmal durch ein Ventilloch (51) oder ein Speichenanbringungsloch hindurch sichtbar ist.

10. Felge nach einem der Ansprüche 1 bis 9, wobei die vorgegebene Verschleißstufe dem vollständigen Verschleiß der ersten Schicht (25; 125; 225; 325; 425; 525; 625; 725; 825; 925) an den Bremsflächen (20; 120; 220; 320; 420; 520; 620; 720; 820; 920) entspricht.

11. Felge nach einem der Ansprüche 1 bis 9, wobei die vorgegebene Verschleißstufe dem vollständigen Verschleiß der zweiten Schicht (40; 140; 240; 340; 440; 540; 640; 740; 840; 940) an den Bremsflächen (20; 120; 220; 320; 420; 520; 620; 720; 820; 920) entspricht.

12. Felge nach Anspruch 10 oder 11, wobei die erste Schicht eine Dicke zwischen 0,1 und 0,8 mm hat.

13. Felge nach Anspruch 12, wobei die erste Schicht (25; 125; 225; 325; 425; 525; 625; 725; 825; 925) eine Dicke zwischen 0,3 und 0,5 mm hat.

14. Felge nach Anspruch 12 oder 13, wobei die zweite Schicht (40; 140; 240; 340; 440; 540; 640; 740; 840; 940) eine Dicke zwischen 0,2 und 1 mm hat.

15. Felge nach Anspruch 14, wobei die zweite Schicht (40; 140; 240; 340; 440; 540; 640; 740; 840; 940) eine Dicke zwischen 0,4 und 0,8 mm hat.

16. Felge nach Anspruch 1, wobei die Verschleißanzeige (40; 140; 240; 340; 440; 540; 640; 740; 840; 940) in der Umfangsrichtung an wenigstens einem Teil der Felge (60, 160) verläuft.

17. Felge nach Anspruch 16, wobei die Verschleißanzeige (40; 140; 240; 340; 440; 540; 640; 740; 840; 940) in der Umfangsrichtung an der gesamten Felge (60; 160) verläuft.

18. Felge nach Anspruch 1, wobei eine Verschleißanzeige (240, 440; 640; 740) nur an einer der Bremsflächen (220; 420; 620; 720) vorhanden ist.

19. Felge nach Anspruch 1, wobei eine entsprechende Verschleißanzeige (40; 140; 340; 540; 840; 940) an jeder der Bremsflächen (20; 120; 320; 520; 820; 920) vorhanden ist.

20. Felge nach Anspruch 1, wobei die Verschleißanzeige (40; 140; 240; 340; 440; 540; 640; 740; 840; 940) selbst außerhalb der Bremsflächen (20; 120; 220; 320; 420; 520; 620; 720; 820; 920) in der radialen Richtung verläuft.

21. Felge nach Anspruch 1, wobei die Bremsflächen (20; 520; 820; 920) durch eine obere Brücke (10; 510; 810; 910) sowie eine unter Brücke (15; 515; 815; 915) verbunden sind und die Verschleißanzeige (40; 540; 840; 940) an wenigstens einer der Bremsflächen (20; 520; 820; 920) und der oberen Brücke (10; 510; 810; 910) verläuft.

22. Felge nach Anspruch 1, wobei die Bremsflächen (820) durch eine obere Brücke (810) sowie durch eine unter Brücke (815) verbunden sind und die Verschleißanzeige (840) an wenigstens einer der Bremsflächen (820) und der unteren Brücke (815) verläuft.

23. Felge nach Anspruch 1, wobei die Verschleißanzeige (40; 140; 240; 340; 440; 640) in der radialen Richtung über eine Höhe verläuft, die geringer ist als die Höhe der Bremsflächen (20; 120; 220; 320; 420; 620).

24. Felge nach Anspruch 1, wobei die Bremsflächen (720) durch wenigstens eine Brücke (710) verbunden sind und Flügel (770) umfassen, die radial außerhalb der Brücke (710) vorstehen und zusammen mit der Brücke (710) einen Raum zum Aufnehmen eines Reifens bilden, und die Verschleißanzeige (740) wenigstens teilweise an wenigstens einem Flügel (770) verläuft.

25. Felge nach Anspruch 1, wobei die Felge des Weiteren wenigstens eine zweite Schicht (40; 140; 240; 340; 440; 540; 640; 740; 840; 940) an einer inneren Position in Bezug auf die erste Schicht (25; 125; 225; 325; 425; 525; 625; 725; 825; 925) umfasst.

26. Felge nach Anspruch 25, wobei die zweite Schicht (40; 140; 240; 340; 440; 540; 640; 740; 840; 940) Tragfähigkeit aufweist.

27. Felge nach Anspruch 26, wobei die zweite Schicht (40; 140; 240; 340; 440; 540; 640; 740; 840; 940) aus Verbundmaterial mit strukturellen Fasern (45) in einer Matrix aus Polymermaterial besteht.

28. Felge nach Anspruch 27, wobei die strukturellen Fasern Aramidfasern, Glasfasern oder Keramikfasern sind.

29. Felge nach Anspruch 1, wobei die erste Schicht (25; 125; 225; 325; 425; 525; 625; 725; 825; 925) aus Verbundmaterial mit strukturellen Fasern in einer Matrix aus Polymermaterial besteht.

30. Felge nach Anspruch 29, wobei die erste Schicht (25; 125; 225; 325; 425; 525; 625; 725; 825; 925) wenigstens zwei Lagen aus Verbundmaterial übereinander umfasst.

31. Felge nach Anspruch 30, wobei die Lagen eine Dicke zwischen 0,1 und 0,3 mm haben.

32. Felge nach Anspruch 29, wobei das Verbundmaterial bidirektionale strukturelle Fasern umfasst.

33. Felge nach Anspruch 1, wobei die erste Schicht keine Tragfähigkeit aufweist.

34. Felge nach Anspruch 25, die eine dritte Schicht (50; 150; 250; 350; 450; 550; 650; 750; 850; 950) an einer inneren Position in Bezug auf die zweite Schicht umfasst.

35. Felge nach Anspruch 34, wobei die dritte Schicht (50; 150; 250; 350; 450; 550; 650; 750; 850; 950) von einem anderen Typ ist als die zweite Schicht (40; 140; 240; 340; 440; 540; 640; 740; 840; 940).

36. Felge nach Anspruch 34, wobei die dritte Schicht (50; 150; 250; 350; 450; 550; 650; 750; 850; 950) vom gleichen Typ ist wie die erste Schicht (25; 125; 225; 325; 425; 525; 625; 725; 825; 925).

37. Felge nach Anspruch 1, wobei das Vorhandensein der Verschleißanzeige (40; 140; 240; 340; 440; 540; 640; 740; 840; 940) auch festgestellt werden kann, wenn die Felge noch nicht verschlissen ist.

38. Felge nach Anspruch 35, wobei das Vorhandensein der Verschleißanzeige (40; 140; 240; 340; 440; 540; 640; 740; 840; 940) über ein Ventilloch (51) oder ein Speichenanbringungsloch festgestellt werden kann.

39. Rad für ein Fahrrad, das eine Felge (1; 101; 201; 301; 401; 501; 601; 701; 801; 901) nach einem der vorangehenden Ansprüche umfasst.

## Revendications

1. Jante constituée d'un matériau composite pour une roue de bicyclette, comprenant deux côtés opposés (5 ; 105 ; 205 ; 305 ; 405 ; 505 ; 605 ; 705 ; 805 ; 905) sur lesquels deux courses de freinage respectives (20 ; 120 ; 220 ; 320 ; 420 ; 520 ; 620 ; 720 ; 820 ; 920) sont formées qui sont sujettes à usure à la suite d'un freinage, **caractérisée en ce qu'**elle comprend - au niveau d'au moins une desdites courses de freinage - au moins une première couche extérieure (25 ; 125 ; 225 ; 325 ; 425 ; 525 ; 625 ; 725 ; 825 ; 925), et un indicateur d'usure (40 ; 140 ; 240 ; 340 ; 440 ; 540 ; 640 ; 740 ; 840 ; 940), approprié pour indiquer lorsqu'un niveau prédéterminé d'usure a été atteint par la jante au niveau des courses de freinage (20 ; 120 ; 220 ; 320 ; 420 ; 520 ; 620 ; 720 ; 820 ; 920), agencé dans la jante à une position intérieure par rapport à la première couche (25 ; 125 ; 225 ; 325 ; 425 ; 525 ; 625 ; 725 ; 825 ; 925), dans laquelle l'indicateur d'usure comprend une deuxième couche de ladite jante (40 ; 140 ; 240; 340 ; 440 ; 540 ; 640 ; 740 ; 840 ; 940) constituée d'un matériau composite ayant des fibres structurelles (45) dans une matrice de matériau polymère et où dans ladite deuxième couche (40 ; 140 ; 240 ; 340 ; 440 ; 540 ; 640 ; 740 ; 840 ; 940) soit au moins une desdites fibres structurelles (45), soit ladite matrice de matériau polymère, ou bien les deux, présentent une caractéristique visible, contrastant avec la première couche (25 ; 125 ; 225 ; 325 ; 425 ; 525 ; 625 ; 725 ; 825 ; 925).

2. Jante selon la revendication 1, dans laquelle la caractéristique visible est une couleur d'indication, différente de la couleur de la première couche (25 ; 125 ; 225 ; 325 ; 425 ; 525 ; 625 ; 725 ; 825 ; 925).

3. Jante selon la revendication 2, dans laquelle une pluralité desdites fibres (45) a ladite couleur d'indication.

4. Jante selon la revendication 3, dans laquelle la totalité desdites fibres (45) a ladite couleur d'indication.

5. Jante selon la revendication 2, dans laquelle ladite au moins une fibre ayant ladite couleur d'indication enroule sans interruptions toute l'extension radiale de la course de freinage (520 ; 720).

6. Jante selon la revendication 2, dans laquelle ladite au moins une fibre (16) ayant ladite couleur d'indication est une fibre d'aramide, une fibre de céramique ou une fibre de verre.

7. Jante selon la revendication 6, dans laquelle ladite au moins une fibre colorée (45) est une fibre d'aramide et la première couche (25 ; 125 ; 225 ; 325 ; 425 ; 525 ; 625 ; 725 ; 825 ; 925) est constituée d'un matériau composite comprenant des fibres de carbone dans une matrice de matériau polymère.

8. Jante selon la revendication 7, dans laquelle toutes les fibres de la deuxième couche (40 ; 140 ; 240 ; 340 ; 440 ; 540 ; 640 ; 740 ; 840 ; 940) sont des fibres colorées.

9. Jante selon la revendication 1, dans laquelle la caractéristique visible est visible à travers un trou pour valve (51) ou un trou de fixation de rayon.

10. Jante selon l'une quelconque des revendications 1 à 9, dans laquelle le niveau prédéterminé d'usure correspond à l'usure complète de la première couche (25 ; 125 ; 225 ; 325 ; 425 ; 525 ; 625 ; 725 ; 825 ; 925) au niveau des courses de freinage (20 ; 120 ; 220 ; 320 ; 420 ; 520 ; 620 ; 720 ; 820 ; 920).

11. Jante selon l'une quelconque des revendications 1 à 9, dans laquelle le niveau prédéterminé d'usure correspond à l'usure complète de la deuxième couche (40 ; 140 ; 240 ; 340 ; 440 ; 540 ; 640 ; 740 ; 840 ; 940) au niveau des courses de freinage (20 ; 120 ; 220 ; 320 ; 420 ; 520 ; 620 ; 720 ; 820 ; 920).

12. Jante selon la revendication 10 ou 11, dans laquelle la première couche a une épaisseur entre 0,1 et 0,8 mm.

13. Jante selon la revendication 12, dans laquelle la première couche (25 ; 125 ; 225 ; 325 ; 425 ; 525 ; 625 ; 725 ; 825 ; 925) a une épaisseur entre 0,3 et 0,5 mm.

14. Jante selon la revendication 12 ou 13, dans laquelle la deuxième couche (40 ; 140 ; 240 ; 340 ; 440 ; 540 ; 640 ; 740 ; 840 ; 940) a une épaisseur entre 0,2 et 1 mm.

15. Jante selon la revendication 14, dans laquelle la deuxième couche (40 ; 140 ; 240 ; 340 ; 440 ; 540 ; 640 ; 740 ; 840 ; 940) a une épaisseur entre 0,4 et 0,8 mm.

16. Jante selon la revendication 1, dans laquelle l'indicateur d'usure (40 ; 140 ; 240 ; 340 ; 440 ; 540 ; 640 ; 740 ; 840 ; 940) s'étend dans la direction circonférentielle sur au moins une partie de la jante (60 ; 160).

17. Jante selon la revendication 16, dans laquelle l'indicateur d'usure (40 ; 140 ; 240 ; 340 ; 440 ; 540 ; 640 ; 740 ; 840 ; 940) s'étend dans la direction circonférentielle sur la totalité de la jante (60 ; 160).

18. Jante selon la revendication 1, dans laquelle un indicateur d'usure (240 ; 440 ; 640 ; 740) est prévu au niveau seulement d'une des courses de freinage (220 ; 420 ; 620 ; 720).

19. Jante selon la revendication 1, dans laquelle un indicateur d'usure respectif (40 ; 140 ; 340 ; 540 ; 840 ; 940) est prévu au niveau de chacune des courses de freinage (20 ; 120 ; 320 ; 520 ; 620 ; 920).

20. Jante selon la revendication 1, dans laquelle l'indicateur d'usure (40 ; 140 ; 240 ; 340 ; 540 ; 640 ; 740 ; 840 ; 940) s'étend dans la direction radiale même en dehors des courses de freinage (20 ; 120 ; 220 ; 320 ; 520 ; 620 ; 720 ; 820 ; 920).

21. Jante selon la revendication 1, dans laquelle les courses de freinage (20 ; 520 ; 820 ; 920) sont reliées par une entretoise supérieure (10 ; 510 ; 610 ; 910) et par une entretoise inférieure (15 ; 515 ; 815 ; 915) et dans laquelle l'indicateur d'usure (40 ; 540 ; 840 ; 940) s'étend au niveau d'au moins une des courses de freinage (20 ; 520 ; 820 ; 920) et au niveau de l'entretoise supérieure (10 ; 510 ; 810 ; 910).

22. Jante selon la revendication 1, dans laquelle les courses de freinage (820) sont reliées par une entretoise supérieure (810) et par une entretoise inférieure (815) et dans laquelle l'indicateur d'usure (840) s'étend au niveau d'au moins une des courses de freinage (820) et au niveau de l'entretoise inférieure (815).

23. Jante selon la revendication 1, dans laquelle l'indicateur d'usure (40 ; 140; 240 ; 340 ; 440 ; 640) s'étend dans la direction radiale pour une hauteur qui est inférieure à la hauteur des courses de freinage (20 ; 120 ; 220 ; 320 ; 420 ; 620).

24. Jante selon la revendication 1, dans laquelle les courses de freinage (720) sont reliées par au moins une entretoise (710) et comprennent des ailettes (770) dépassant radialement à l'extérieur de l'entretoise (710) de façon à former, en même temps que l'entretoise (710), un espace destiné à maintenir un pneu, dans laquelle l'indicateur d'usure (740) s'étend au moins partiellement sur au moins une ailette (770).

25. Jante selon la revendication 1, dans laquelle la jante comprend également au moins une deuxième couche (40 ; 140 ; 240 ; 340 ; 440 ; 540 ; 640 ; 740 ; 840 ; 940), à une position intérieure par rapport à la première couche (25 ; 125 ; 225 ; 325 ; 425 ; 525 ; 625 ; 725 ; 825 ; 925).

26. Jante selon la revendication 25, dans laquelle la deuxième couche (40 ; 140 ; 240 ; 340 ; 440 ; 540 ; 640 ; 740 ; 840 ; 940) présente une capacité structurelle.

27. Jante selon la revendication 26, dans laquelle la deuxième couche (40 ; 140 ; 240 ; 340 ; 440 ; 540 ; 640 ; 740 ; 840 ; 940) est constituée d'un matériau composite ayant des fibres structurelles (45) dans une matrice de matériau polymère.

28. Jante selon la revendication 27, dans laquelle les fibres structurelles (45) sont des fibres d'aramide, des fibres de verre ou des fibres de céramique.

29. Jante selon la revendication 1, dans laquelle la première couche (25 ; 125 ; 225 ; 325 ; 425 ; 525 ; 625 ; 725 ; 825 ; 925) est constituée d'un matériau composite ayant des fibres structurelles dans une matrice de matériau polymère.

30. Jante selon la revendication 29, dans laquelle la première couche (25 ; 125 ; 225 ; 325 ; 425 ; 525 ; 625 ; 725 ; 825 ; 925) comprend au moins deux feuilles de matériau composite l'une au-dessus de l'autre.

31. Jante selon la revendication 30, dans laquelle lesdites feuilles ont une épaisseur entre 0,1 et 0,3 mm.

32. Jante selon la revendication 29, dans laquelle le matériau composite comprend des fibres structurelles bidirectionnelles.

33. Jante selon la revendication 1, dans laquelle la première couche ne présente pas de capacités structurelles.

34. Jante selon la revendication 25, comprenant une troisième couche (50; 150 ; 250 ; 350 ; 450 ; 550 ; 650 ; 750 ; 850 ; 950) à une position intérieure par rapport à la deuxième couche,

35. Jante selon la revendication 34, dans laquelle la troisième couche (50 ; 150 ; 250 ; 350 ; 450; 550 ; 650 ; 750 ; 850 ; 950) est d'un type différent de celui de la deuxième couche (40 ; 140 ; 240 ; 340 ; 440 ; 540 ; 640 ; 740 ; 840 ; 940).

36. Jante selon la revendication 34, dans laquelle la troisième couche (50 ; 150 ; 250 ; 350 ; 450 ; 550 ; 650 ; 750 ; 850 ; 950) est du même type que celui de la première couche (25 ; 125 ; 225 ; 325 ; 425 ; 525 ; 625 ; 725 ; 825 ; 925).

37. Jante selon la revendication 1, dans laquelle la présence de l'indicateur d'usure (40 ; 140 ; 240 ; 340 ; 440 ; 540 ; 640 ; 740 ; 840 ; 940) peut également être détectée lorsque la jante n'est pas encore usée.

38. Jante selon la revendication 35, dans laquelle la présence de l'indicateur d'usure (40 ; 140 ; 240 ; 340 ; 440 ; 540 ; 640 ; 740 ; 840 ; 940) peut être détectée par un trou pour valve (51) ou un trou de fixation de rayon.

39. Roue de bicyclette, comprenant une jante (1 ; 101 ; 201 ; 301 ; 401 ; 501 ; 601 ; 701 ; 801 ; 901) selon l'une quelconque des revendications précédentes.
